# EUROPEAN PATENT APPLICATION

(11) **EP 4 254 029 A1**
(43) Date of publication of application: **04.10.2023**
(21) Application number: 22888632.1
(22) Date of filing: 09.09.2022
(51) Int. Cl.: G02B 6/255, H01S 3/067

(54) **OPTICAL FIBER AMPLIFICATION DEVICE**

(30) Priority: 14.02.2022 CN 202210131565
(71) Applicant: Wuhan Raycus Fiber Laser Technologies Co., Ltd, East Lake Hi-Tech Development Zone Wuhan, Hubei 430000 (CN)
(72) Inventor: LI, Chi, Wuhan, Hubei 430000 (CN); LI, Libo, Wuhan, Hubei 430000 (CN); YAN, Dapeng, Wuhan, Hubei 430000 (CN)
(74) Representative: Murgitroyd & Company
(86) International application number: PCT/CN2022/118226
(87) International publication number: WO 2023/151272

(57) **Abstract**

The present application provides an optical fiber amplifying equipment. The optical fiber amplifying equipment includes an optical fiber winding device, a connecting device, and an optical fiber welding device. The optical fiber welding device is connected to the non-optical fiber winding surface of the optical fiber winding device through the connecting device. The optical fiber winding device is configured to wind a target optical fiber on the optical fiber winding surface. The connecting device is configured to isolate the optical fiber winding device and the optical fiber welding device. The optical fiber welding device is configured to weld, inside the optical fiber welding device, the target optical fiber and an external optical fiber of an external optical path.

## Description

### TECHNICAL FIELD

The present application relates to a field of optical fiber technologies, and particularly relates to an optical fiber amplifying equipment.

### BACKGROUND

A fiber laser has advantages of good beam quality, high conversion efficiency, compact structure, convenient maintenance and management, etc. The fiber laser has a broad application prospect in industrial processing, 3D printing, military equipment, and other fields. In recent years, fiber laser technologies have developed rapidly, and output power of the fiber laser has been continuously improved.

An optical fiber amplifying module is an important component of the fiber laser, and generally realizes its functions by winding an optical fiber. In actual use, it is generally necessary to weld the optical fiber amplifying module with the optical fiber in the laser to form a structure as a whole. However, in actual operation process, an internal space of the fiber laser is limited, and welding the optical fiber needs to meet certain welding conditions. When external welding conditions change, for example, a winding length of the optical fiber, a winding direction, and a position of an external optical fiber change, a position of a welding point will be adjusted accordingly. This makes operation difficulty of welding the optical fiber in the optical fiber amplifying equipment with the external optical fiber in the laser be increased, operation process is more complicated, and welding quality of welding the optical fiber is not ensured.

### TECHNICAL PROBLEMS

In terms of a problem in related technologies that operational complexity of welding an optical fiber in an optical fiber amplifying equipment with an external optical fiber is higher, no effective solutions have been proposed at present.

### TECHNICAL SOLUTIONS

The present application provides an optical fiber amplifying equipment to at least solve a problem in related technologies that operational complexity of welding an optical fiber in an optical fiber amplifying equipment and an external optical fiber is higher.

An optical fiber amplifying equipment provided by an embodiment of the present application includes: an optical fiber winding device, a connecting device, and an optical fiber welding device, wherein the optical fiber winding device includes an optical fiber winding surface and a non-optical fiber winding surface, the optical fiber welding device is connected to the non-optical fiber winding surface of the optical fiber winding device through the connecting device;

and wherein the optical fiber winding device is configured to wind a target optical fiber on the optical fiber winding surface; the connecting device is configured to isolate the optical fiber winding device and the optical fiber welding device, so that a distance between the optical fiber welding device and the optical fiber winding surface is greater than a target distance; the optical fiber welding device is configured to weld, inside the optical fiber welding device, the target optical fiber and an external optical fiber of an external optical path.

### BENEFICIAL EFFECTS

By the present application, an equipment includes an optical fiber winding device, a connecting device, and an optical fiber welding device. The optical fiber winding device includes an optical fiber winding surface and a non-optical fiber winding surface, the optical fiber welding device is connected to the non-optical fiber winding surface of the optical fiber winding device through the connecting device. The optical fiber winding device is configured to wind a target optical fiber on the optical fiber winding surface. The connecting device is configured to isolate the optical fiber winding device and the optical fiber welding device, so that a distance between the optical fiber welding device and the optical fiber winding surface is greater than a target distance. The optical fiber welding device is configured to weld, inside the optical fiber welding device, the target optical fiber and an external optical fiber of an external optical path. That is, the optical fiber winding device is connected to the optical fiber welding device through the connecting device. The optical fiber welding device may weld the target optical fiber on the optical fiber winding device and the external optical fiber of the external optical path. Both the optical fiber welding device and the connecting device may be designed to be connected at corresponding positions at required angles. The connecting device controls the distance between the optical fiber welding device and the optical fiber winding device to be greater than the target distance, so as to prevent the optical fiber welding device from colliding with the optical fiber wound on the optical fiber winding device, when welding operation is performed. Therefore, a problem in related technologies that operational complexity of welding the optical fiber in an optical fiber amplifying equipment with the external optical fiber is higher is resolved, thereby achieving effect of reducing the operational complexity of welding the optical fiber in the optical fiber amplifying equipment with the external optical fiber.

### DESCRIPTION OF DRAWINGS

FIG. 1 is a schematic diagram of an optical fiber amplifying equipment according to an embodiment of the present application.
FIG. 2 is a schematic diagram of an optional rotatable optical fiber welding frame according to an embodiment of the present application.
FIG. 3 is a schematic diagram of an optional position of a welding point according to an embodiment of the present application.
FIG. 4 is a schematic diagram of an optional rotation of a welding frame according to an embodiment of the present application.
FIG. 5 is a schematic diagram of an optional optical fiber winding device according to an embodiment of the present application.
FIG. 6 is a schematic diagram of an optional rotation of a rotatable connecting device according to an embodiment of the present application.
FIG. 7 is a schematic diagram of an optional rotation of a connecting device according to an embodiment of the present application.
FIG. 8 is a first schematic diagram of an optional connection between a connecting block and the optical fiber welding frame according to an embodiment of the present application.
FIG. 9 is a second schematic diagram of the optional connection between the connecting block and the optical fiber welding frame according to an embodiment of the present application.
FIG. 10 is a schematic diagram of an optional winding mode of the optical fiber according to an embodiment of the present application.
FIG. 11 is a schematic diagram of an optional arrangement of the optical fiber welding frame according to an embodiment of the present application.
FIG. 12 is a schematic diagram of an optional optical fiber amplifying equipment according to an embodiment of the present application.
FIG. 13 is a schematic diagram of an optional cooling device according to an embodiment of the present application.
FIG. 14 is a general assembly diagram of another optional optical fiber amplifying equipment according to an embodiment of the present application.

### DETAILED DESCRIPTION OF EMBODIMENTS

Embodiments of the present application will be described in detail below with reference to accompanying drawings and in conjunction with embodiments.

It should be noted that terms "first", "second" and the like in the specification and claims of the present application and above drawings are used to distinguish similar objects and not be used to describe a specific order or sequence.

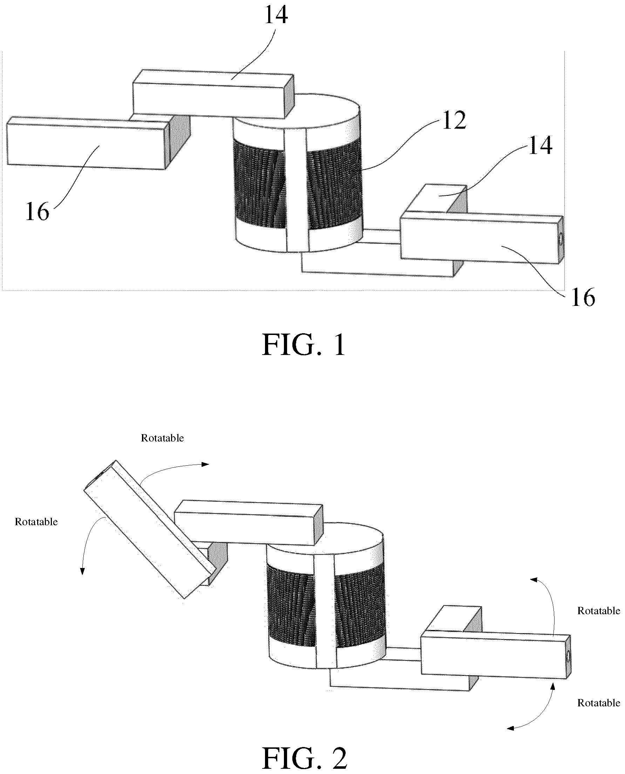

The embodiment provides an optical fiber winding device. FIG. 1 is a schematic diagram of an optical fiber amplifying equipment according to an embodiment of the present application. As shown in FIG. 1, a shape of an optical fiber winding device 12, a shape of a connecting device 14, and a shape of an optical fiber welding device 16 in the figure are only examples. In actual use, the optical fiber winding device 12 may be, but is not limited to, a cylinder body, a frustum body, a sphere body, a drum-shaped body, a prism, an elliptical sphere, etc. In actual use, the connecting device 14 may be, but is not limited to, an L-shaped solid structure, a Z-shaped solid structure, an arc-shaped solid structure, etc. In actual use, the welding device may be, but is not limited to, t a cylinder, a cuboid, a special-shaped, etc. The equipment includes the optical fiber winding device 12, the connecting device 14, and the optical fiber welding device 16. The optical fiber winding device 12 includes an optical fiber winding surface and a non-optical fiber winding surface. The optical fiber welding device 16 is connected to the non-optical fiber winding surface of the optical fiber winding device 12 through the connecting device.

The optical fiber winding device 12 is configured to wind a target optical fiber on the optical fiber winding surface.

The connecting device 14 is configured to isolate the optical fiber winding device 12 and the optical fiber welding device 16, so that a distance between the optical fiber welding device 16 and the optical fiber winding surface is greater than a target distance.

The optical fiber welding device 16 is configured to weld, inside the optical fiber welding device 16, the target optical fiber with an external optical fiber of an external optical path.

Optionally, in this embodiment, the optical fiber winding device 12 may be a hollow cavity structure, and may further be a non-hollow solid structure.

Optionally, in this embodiment, the connecting device 14 may connect to the optical fiber winding device 12 at any position on the non-optical fiber winding surface of the optical fiber winding device 12. For example, in FIG. 1, the optical fiber winding device 12 is the cylinder, and a top surface and a bottom surface of the cylinder are the non-optical fiber winding surface. The connecting device 14 may connect to the optical fiber winding device 12 at a center position of the top surface, and the connecting device 14 may connect to the optical fiber winding device 12 at any position on the top surface except the center, which is not limited in this embodiment.

Optionally, in this embodiment, the connecting device 14 and the optical fiber winding device 12 may be either fixedly connected or rotationally connected. For example, the connecting device 14 may be fixed to a connecting point on the optical fiber winding device 12. The connecting device 14 may further rotate axially around the connecting point on the optical fiber winding device 12 at any angle, which is not limited in this embodiment.

Optionally, in this embodiment, when the optical fiber welding device 16 welds the target optical fiber with the external optical fiber, the target optical fiber and the external optical fiber may extend into a welding point from inside of a structure of the optical fiber welding device 16, or may further extend into the welding point from outside of the optical fiber welding device 16. The welding points of different extending modes may be different, which is not limited in this embodiment.

Optionally, in this embodiment, the target distance may be set to any numerical value, such as 1 cm, 5 cm, 5.1 cm, and 10 cm.

By the above-mentioned equipment, the optical fiber winding device 12 is connected to the optical fiber welding device 16 through the connecting device 14. The optical fiber welding device 16 may weld the target optical fiber on the optical fiber winding device with the external optical fiber of the external optical path. Both the optical fiber welding device 16 and the connecting device 14 may be designed to be connected at corresponding positions at required angles. The connecting device 14 controls the distance between the optical fiber welding device 16 and the optical fiber winding device 12 to be greater than the target distance, so as to prevent the optical fiber welding device 16 from colliding with the optical fiber wound on the optical fiber winding device 16, when welding the optical fiber. Therefore, the problem that operational complexity of welding the optical fiber in the optical fiber amplifying equipment with the external optical fiber is higher is resolved, thereby achieving effect of reducing the operational complexity of welding the optical fiber in the optical fiber amplifying equipment with the external optical fiber.

As an optional embodiment, the optical fiber welding device 16 and the connecting device 14 are connected through a first shaft. The optical fiber welding device 16 is allowed to rotate by taking the first shaft as an axis.

Optionally, in this embodiment, the first shaft may be a solid structure, and may further be a hollow structure. For example, when the first shaft is the hollow structure, lines (an electrical line, the optical fiber, a cooling water channel, etc.) between the optical fiber welding device 16 and the optical fiber winding device 12 may pass through a hollow area of the shaft, so as to realize that the lines of the optical fiber welding device 16 are disposed inside the optical fiber welding device 16, thereby hiding the lines to make an appearance of the device simple.

FIG. 2 is a schematic diagram of an optional rotatable optical fiber welding frame according to an embodiment of the present application. As shown in FIG. 2, a welding frame may rotate clockwise or counterclockwise around the shaft with a connecting block, so that an angle of the welding frame may be adjusted according to a position of the external optical fiber in actual use.

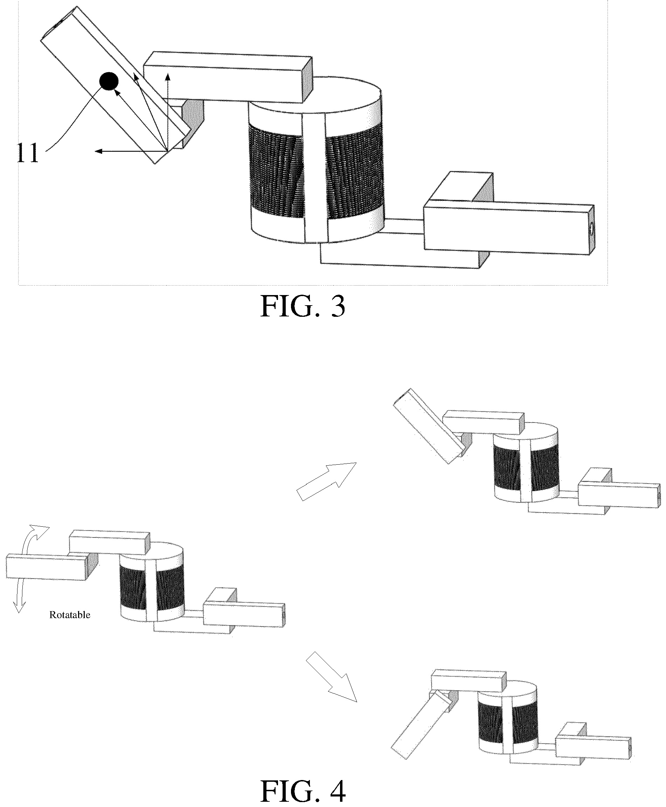

The welding point 11 is disposed inside the welding frame, the optical fiber wound on an optical fiber winding post and the external optical fiber extend to the welding point 11 for welding. A rotation of the welding frame may realize a welding of the optical fiber at any position, or the position of the welding point 11 is adjusted according to an angle and the position of the external optical fiber. FIG. 3 is a schematic diagram of an optional position of a welding point according to an embodiment of the present application. As shown in FIG. 3, in order to meet requirements of welding the optical fiber in any direction, it is realized by rotating the optical fiber welding frame to make the optical fiber welded in any direction. In actual use, the optical fiber welding frame are rotatable within a certain allowable angle according to actual demands.

In a process of actual use, a conveying direction of the external optical fiber may be along any direction. In order to meet requirements of applying to the external optical fiber in any direction and the optical fiber wound on the optical fiber winding device, the welding frame in the embodiment of the present application may rotate clockwise or counterclockwise around the connecting point between the welding frame and the connecting block. FIG. 4 is a schematic diagram of an optional rotation of a welding frame according to an embodiment of the present application. As shown in FIG. 4, the welding frame may, but is not limited to, rotate clockwise or counterclockwise along the connecting point with the connecting block within a certain allowable angle.

As an optional embodiment, the connecting device is connected to the non-optical fiber winding surface through a second shaft, and the connecting device is allowed to rotate by taking the second shaft as an axis.

Optionally, in this embodiment, the second shaft may be a solid structure, and may be a hollow structure. For example, when the second shaft is the hollow structure, lines (the electrical line, the optical fiber, the cooling water channel, etc.) between the connecting device and the optical fiber winding device may pass through the hollow area of the shaft, so as to realize that the lines of the connecting device are disposed inside the connecting device, thereby hiding the lines to make the appearance of the device simple.

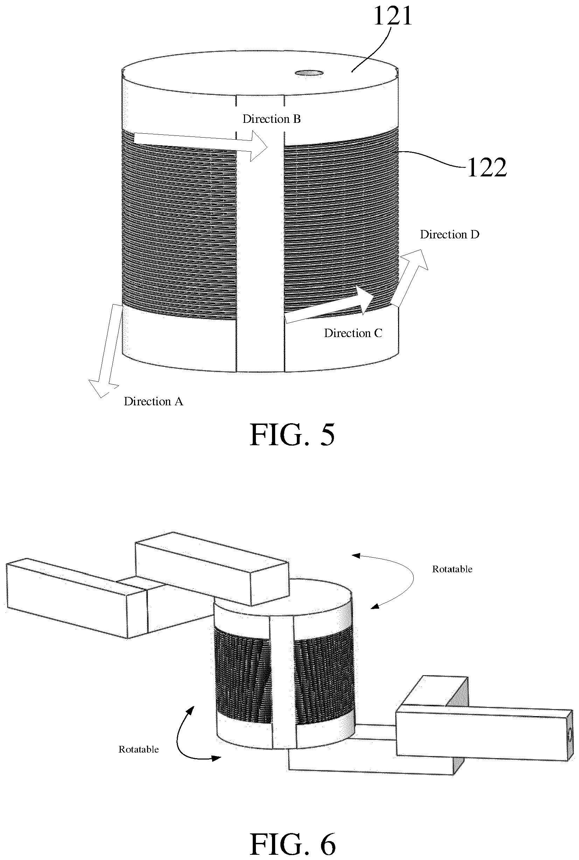

FIG. 5 is a schematic diagram of an optional optical fiber winding device according to an embodiment of the present application. As shown in FIG. 5, the fiber winding device being the cylinder is only an example. In actual use, the optical fiber winding device may be, but is not limited to, the frustum, the sphere, the drum-shaped body, the prism, the elliptical sphere, etc. The optical fiber is wound on the optical fiber winding surface 121 of the optical fiber winding post as shown in FIG. 5, and emitting directions of emitting points of the optical fiber are tangent to the optical fiber winding surface 121. In actual use, when lengths of the optical fibers wound on the optical fiber winding post are different, the emitting directions of the optical fiber are different. Four emitting points of the optical fiber are listed illustratively in the figure, and the emitting directions of the four emitting points of the optical fiber are directions A, B, C, and D, respectively. After extending from the emitting points, the optical fiber extends into an optical fiber inlet on the optical fiber welding frame, and extends into the welding point on the optical fiber welding frame for welding. To satisfy a demand that the emitting points may be any points on the fiber winding surface 121, the connecting device and the non-optical fiber winding surface 122 of the optical fiber winding device are connected through the shaft, so that the connecting device may rotate around the shaft, thereby driving the optical fiber welding device rotate around the optical fiber winding surface 121, ensuring that the optical fiber emitted from the optical fiber winding surface 121 may directly extend into an optical fiber welding cavity of the optical fiber welding frame, and preventing excessive exposure of the optical fiber.

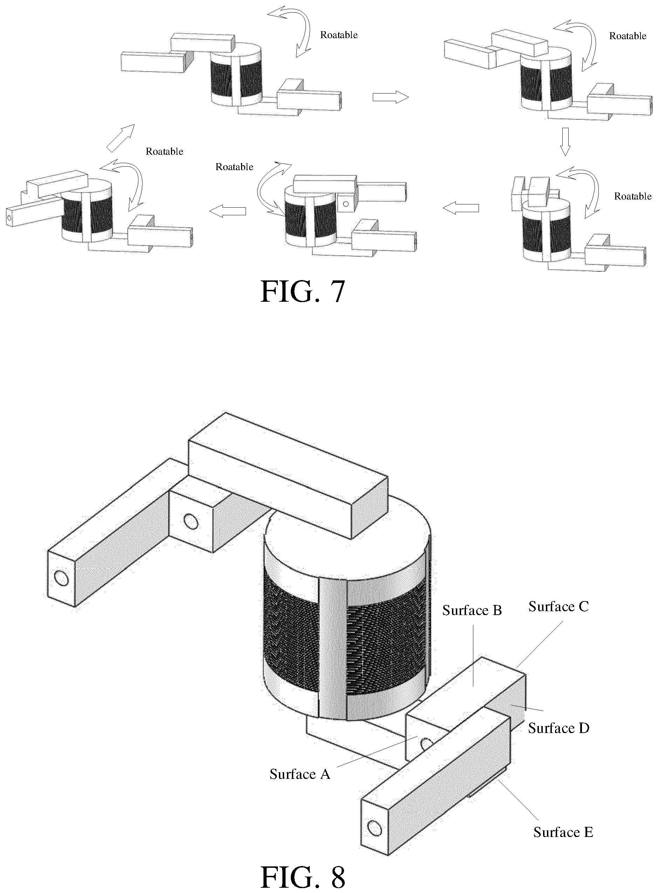

FIG. 6 is a schematic diagram of an optional rotation of a rotatable connecting device according to an embodiment of the present application. As shown in FIG. 6, the rotatable connecting device may, but is not limited to, be applied to the optical fiber winding device as in FIG. 1. The connecting device is respectively connected to upper and lower non-optical fiber winding surfaces of the optical fiber winding device through the shaft. The connecting device may drive the optical fiber welding device to rotate clockwise or counterclockwise around the optical fiber winding surface. The connecting device is configured to connect the optical fiber winding device and the optical fiber welding frame, and control a distance between the welding frame and the optical fiber winding surface, so as to prevent a damage of the optical fiber resulted from a contact of the optical fiber welding frame with the optical fiber winding surface. The connecting device may rotate around the connecting point between the connecting device and the optical fiber winding device, so as to drive the optical welding frame to rotate around the optical fiber winding surface of the optical fiber winding device. At a same time, the optical fiber welding frame may rotate clockwise or counterclockwise around the connecting point between the optical fiber welding frame and the connection block. Since an incident point and the emitting points of the optical fiber on the optical fiber winding device may be any position on the optical fiber winding device, the connecting block in the embodiment of the present application may rotate around the connecting point of the optical fiber winding device in any direction. FIG. 7 is a schematic diagram of an optional rotation of a connecting device according to an embodiment of the present application. As shown in FIG. 7, the connecting device may drive the welding frame to rotate 0-360 degrees around the optical fiber winding surface of the optical fiber winding device, thereby meeting requirements of outputting and inputting the optical fiber at any position on the optical fiber winding device, so as to ensure that the optical fiber extending from the emitting points of the optical fiber winding device directly extends into the optical fiber welding frame, or the optical fiber extending from the optical fiber welding frame directly extends into the incident point of the optical fiber winding device.

By the above equipment, the optical fiber welding device and the connecting device are connected through the first shaft, so that the optical fiber welding device is allowed to rotate around the first shaft as a center. The connecting device and the optical fiber winding device are connected through the second shaft, so that the connecting device is allowed to rotate around the second shaft as the axis. Without changing a main structure of the optical fiber amplifying equipment, an internal optical fiber of the optical fiber winding device and the optical fiber of the external optical path in any direction may be welded. No matter how external welding conditions change, such as a change in a winding length of the optical fiber, a winding direction, a position of the external optical fiber, or an external connecting device adjusted according to industrial requirements, the optical fiber amplifying equipment may be adaptively adjusted to a suitable posture for welding the optical fiber, and thus a wiring path and a wiring range of the external optical fiber are broadened, and universality and adaptability of an overall device are improved, which is beneficial to installation and maintenance.

As an optional embodiment, a length of a part of the connecting device extending along the non-optical fiber winding surface is greater than a maximum distance from a position of the second shaft on the non-optical fiber winding surface to an edge of the non-optical fiber winding surface. By means of the above equipment and by means of setting the length of the part of the connecting device extending along the non-optical fiber winding surface to be greater than the maximum distance from the shaft to the edge of the non-optical fiber winding surface, it can achieve the effect of limiting a minimum distance between the optical fiber welding device and the optical fiber winding surface, and ensuring that the optical fiber welding frame does not collide with the optical fiber wound on the optical fiber winding surface, when the connecting device rotates around the second shaft.

As an optional embodiment, the optical fiber welding device includes a first optical fiber welding frame and a second optical fiber welding frame. The connecting device includes a first connecting block and a second connecting block. A shape of the optical fiber winding device is a post. The optical fiber winding surface includes an outer side surface of the post. The non-optical fiber winding surface includes a top surface of the post and a bottom surface of the post. The first optical fiber welding frame is provided with a first welding cavity. A first fiber head of the target optical fiber extends into the first welding cavity. The first optical fiber welding frame is connected to the top surface through the first connecting block.

The second optical fiber welding frame is provided with a second welding cavity. The second fiber head of the target optical fiber extends into the second welding cavity. The second optical fiber welding frame is connected to the bottom surface through the second connecting block.

Optionally, in this embodiment, a size of the first connecting block and a size of the second connecting block may be the same, and may also be different.

Optionally, in this embodiment, the first fiber head may be, but is not limited to, a port at which light beam is incident or a port at which the light beam is emitted. The second fiber head may be, but is not limited to, the port at which the light beam is incident or the port at which the light beam is emitted. For example, when the first fiber head is the port at which the light beam is incident, the second fiber head is the port at which the light beam is emitted.

Optionally, in this embodiment, the optical fiber welding frame may be, but is not limited to, installed on any surface of the connection block. FIG. 8 is a first schematic diagram of an optional connection between a connecting block and the optical fiber welding frame according to an embodiment of the present application. The connection between the connecting block and the optical fiber welding frame may, but is not limited to, be applied to the optical fiber winding device in FIG. 1. As shown in FIG. 8, a connecting end between the connecting block and the welding frame may be, but is not limited to, a cube with a regular shape. As shown in FIG. 8, the connecting end between the connecting block and the welding frame includes five connecting surfaces A, B, C, D, and E. The welding frame may, but is not limited to, be disposed above any one or more of the five connecting surfaces A, B, C, D, and E. As shown in FIG. 8, the welding frame is disposed on the surface D of the connecting block.

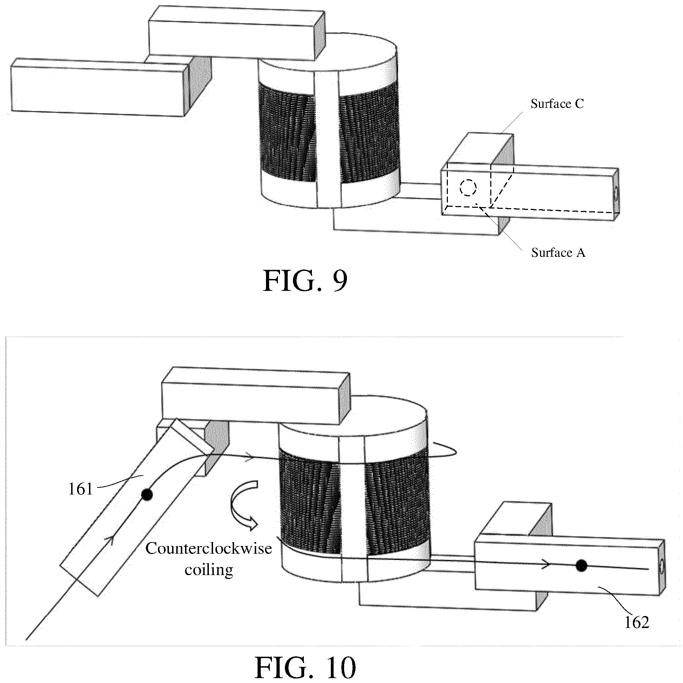

FIG. 9 is a second schematic diagram of the optional connection between the connecting block and the optical fiber welding frame according to an embodiment of the present application. As shown in FIG. 9, the optical fiber welding frame is disposed on the surface A of the connecting block. At the same time, the optical fiber welding frame may be disposed on the surface C of the connecting block. The welding frame is disposed on different connecting surfaces of the connecting block to meet the requirements of welding the optical fiber in any direction.

Optionally, in this embodiment, the optical fiber wound on the optical fiber winding device is output from any point on the winding surface. After being output, the optical fiber passes through the optical fiber inlet at an end of the optical fiber welding frame and extends to the welding point for welding. The optical fiber wound on the optical fiber winding device may be wound clockwise along the optical fiber winding post, may also be wound counterclockwise along the optical fiber winding post, which is not limited in this embodiment. FIG. 10 is a schematic diagram of an optional winding mode of the optical fiber according to an embodiment of the present application. The winding mode of the optical fiber may, but is not limited to, be applied to the optical fiber amplifying equipment as shown in FIG. 1. As shown in FIG. 10, the optical fiber winding device may, but is not limited to, be a cylindrical-body optical fiber winding post. After passing through the first optical fiber welding frame 161, the optical fiber wound on the optical fiber winding post is wound on the optical fiber winding post in a counterclockwise direction, extends from the emitting point on the optical fiber winding post, and directly extends into the optical fiber inlet of the second optical fiber welding frame 162, so that the optical fiber extends to the welding point of the second optical fiber welding frame 162.

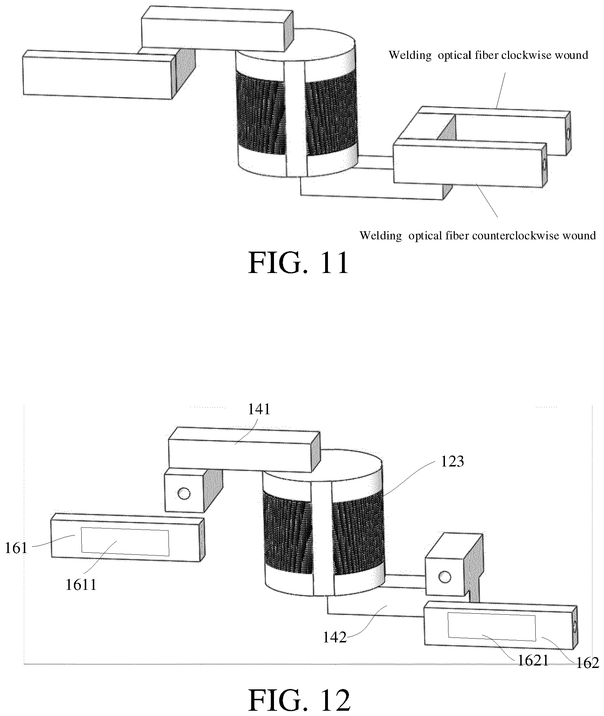

Optionally, in this embodiment, each connecting block may, but is not limited to, be provided with one welding frame or a plurality of welding frames to meet requirements of different output positions of the optical fiber on the optical fiber winding device. When each connecting block is provided with the plurality of optical fiber welding frames, the plurality of optical fiber welding frames may be symmetrically arranged to weld the optical fibers wound in different winding directions on the optical fiber winding post. FIG. 11 is a schematic diagram of an optional arrangement of the optical fiber welding frame according to an embodiment of the present application. The arrangement of the optical fiber welding frame may, but is not limited to, be applied to the connecting block as shown in FIG. 1. As shown in FIG. 11, a quantity of the first optical fiber welding frame or the second optical fiber welding frame may be two. The two optical fiber welding frames are symmetrically arranged on the connecting block, and are respectively arranged on the surface A and the surface C of the connecting block. One of the two optical fiber welding frames is configured to weld the optical fiber wound clockwise on the optical fiber welding device, and another one of the two optical fiber welding frames is configured to weld the optical fiber wound counterclockwise on the optical fiber welding device. This ensures that the optical fiber wound clockwise and counterclockwise on the optical fiber welding device stretches out from the optical fiber winding surface and directly extend into the optical fiber welding frame for welding.

As an optional embodiment, the equipment further includes: a cooling device.

The cooling device includes a first coolant channel and a second coolant channel.

The first coolant channel is disposed in the first optical fiber welding frame, and the first coolant channel is in contact with the first welding cavity.

The second coolant channel is disposed in the second optical fiber welding frame, and the second coolant channel is in contact with the second welding cavity.

Optionally, in this embodiment, a coolant may circulate in the coolant channel to cool heating parts of the equipment, thereby preventing influence on performance and service life of the equipment caused by an excessive local temperature. The coolant may be, but is not limited to, a liquid coolant or a gaseous coolant. For example, the coolant may be a liquid coolant, such as cooling water, cooling oil, and cooling silicone grease. The coolant may further be a gaseous coolant, such as cold air, which is not limited in this embodiment.

Optionally, in this embodiment, the first coolant channel and the second coolant channel may be communicated to form a coolant circulation channel, and the coolant circulates in the first coolant channel and the second coolant channel. Or, the first coolant channel and the second coolant channel may each individually be the coolant circulation channel, that is, the coolant in the first coolant channel is not transmitted into the second coolant channel.

By the above equipment, the welding frame is provided with the coolant channel, and local heating positions in the welding frame are cooled by the coolant channel, thereby preventing local overheating.

As an optional embodiment, the cooling device further includes a third coolant channel.

The optical fiber winding device is a hollow cavity. The third coolant channel is defined in the hollow cavity. The third coolant channel is in contract with an inner side surface of the optical fiber winding device. A contact area of the third coolant channel with the inner side surface of the optical fiber winding device is greater than or equal to a target area threshold.

Optionally, in this embodiment, the third coolant channel may be a pipe spirally wound in the hollow cavity or a pipe matching a shape of the hollow cavity, which is not limited in this embodiment.

Optionally, in this embodiment, an interface shape of the coolant channel may be, but is not limited to, a circle, a square, a rectangle, a triangle, a diamond, and the like, which is not limited in this embodiment.

Optionally, in this embodiment, the first coolant channel may extend outside the first connecting block to be connected to the third coolant channel at a first channel port. Otherwise, the first coolant channel may further extend inside the first connecting block to be connected to the third coolant channel at the first channel port. For example, when the first coolant channel extends inside the first connecting block, the first shaft and the second shaft are hollow shafts. The first coolant channel passes through the hollow area of the second shaft to extend into an interior of the first connecting block, and the first coolant channel continues to extend inside the first connecting block, and is connected to the first channel port through the hollow area of the first shaft.

Optionally, in this embodiment, the second coolant channel may extend outside the second connecting block to be connected to the third coolant channel at a second channel port. Otherwise, the second coolant channel may further extend inside the second connecting block to be connected to the third coolant channel at the second channel port. For example, when the second coolant channel extends inside the second connecting block, the first shaft and the second shaft are hollow shafts. The second coolant channel passes through the hollow area of the second shaft to extend into an interior of the second connecting block, and the second coolant channel continues to extend inside the second connecting block and is connected to the second channel port through the hollow area of the first shaft.

Optionally, in this embodiment, the first coolant channel, the second coolant channel, and the third coolant channel may be respectively provided as independent coolant circulation channels. Types of the coolants in the first coolant channel, the second coolant channel, and the third coolant channel may be the same, and may further be different. The first coolant channel, the second coolant channel, and the third coolant channel may be respectively provided as independent coolant circulation channels, so as to ensure cooling effect of the first welding cavity, the second welding cavity, and the optical fiber winding device. By means of using different types of the coolants circulated in the first coolant channel, the second coolant channel, and the third coolant channel, the coolants which circulate in coolant channels and meet refrigeration requirements of parts to be cooled (the first welding cavity, the second welding cavity, and the optical fiber winding device) could be realized, thereby ensuring the cooling effect of any part of the parts (the first welding cavity, the second welding cavity, and the optical fiber winding device) to be cooled.

Optionally, in this embodiment, the first coolant channel, the second coolant channel, and the third coolant channel may be communicated to form the coolant circulation channel. For example, one channel port of the third coolant channel is connected to the first coolant channel, and another channel port of the third coolant channel is connected to the second coolant channel. Otherwise, it may further be that any two of the first coolant channel, the second coolant channel, and the third coolant channel are communicated, so that the cooling device of the optical fiber amplifying equipment includes two coolant circulation channels. For example, one channel port of the first coolant channel is connected to one channel port of the second coolant channel to form one coolant circulation channel. The third second coolant channel forms one coolant circulation channel independently. The connection between the coolant channels may reduce effect of the number of water inlets and outlets, thereby reducing space resources occupied by the equipment.

FIG. 12 is a schematic diagram of an optional optical fiber amplifying equipment according to an embodiment of the present application. The optical fiber winding device of the optional optical fiber amplifying equipment is a cylindrical optical fiber winding post, and may further be provided as a frustum body, a sphere body, a prism body, etc. As shown in FIG. 12, the optical fiber amplifying equipment may, but is not limited to, includes the optical fiber winding post 123, the first connecting block 141, the second connecting block 142, the first optical fiber welding frame 161, and the second optical fiber welding frame 162. A first optical fiber welding cavity is defined in the first optical fiber welding frame 161, and a second optical fiber welding cavity is defined in the second optical fiber welding frame 162. The first optical fiber welding frame 161 is fixed on an upper top surface of the optical fiber winding post 123 through the first connecting block 141, and the second optical fiber welding frame 162 is fixed on a lower bottom surface of the optical fiber winding post 123 through the second connecting block 142. A surface of the optical fiber winding post 123 is provided with an optical fiber groove, and the optical fiber groove is spirally wound along a cylindrical surface in the clockwise (counterclockwise) direction. A winding radius of the optical fiber groove may be unchanged or gradually increased according to actual demands. The cylindrical surface of optical fiber winding post 123 is provided with four grooves arrayed 90 degrees along a circumference. The grooves are configured to fix the optical fiber wound with tin foil, so that the optical fiber clings to the optical fiber groove. The optical fiber winding post is a hollow cavity. The cooling device is disposed in the hollow cavity and clings to an inner surface of the cavity.

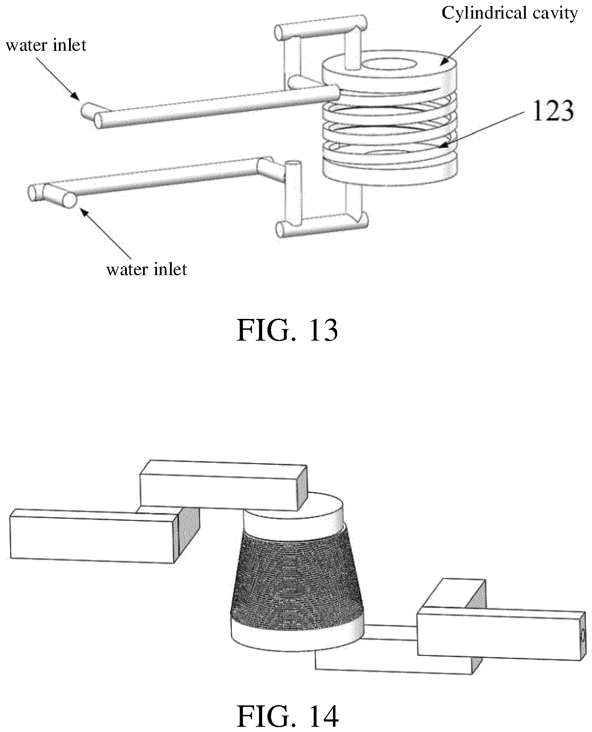

FIG. 13 is a schematic diagram of an optional cooling device according to an embodiment of the present application. The cooling device is applied to the optical fiber amplifying equipment in FIG. 1. As shown in FIG. 13, the cooling device may, but is limited to, include following context. An interior of optical fiber winding post is designed as a spiral pipe 124, which is sealed by friction stir welding. The spiral pipe 124 may make all surfaces of the optical fiber groove cling to internal water channel, thereby increasing heat dissipation contact area. A water inlet and outlet of the optical fiber winding post are disposed on bottom surfaces of both ends of the post. Two ends of the spiral pipe 124 are connected to two cylindrical cavities, which has benefit that only two ends of the spiral pipe 124 are necessary to be connected to the two cylindrical cavities at the time of machining bottom holes at two ends of the optical fiber winding post, i.e., the inlet and outlet, after the bottom surface of the optical fiber winding post is sealed by the friction welding. The water channel is disposed inside the optical fiber welding frame. A welding surface of the optical fiber welding frame is configured to weld the optical fiber at both ends of the optical fiber winding post and the optical fiber of the external optical path. Because of a high temperature of the welding point, the water channel should be disposed inside the optical fiber welding frame to provide heat dissipation for the welding point. Two optical fiber welding frames are respectively fixed on two bottom surfaces of the optical fiber winding post through two connecting blocks. The water channel is defined inside the connecting block. Because the welding surface of the optical fiber welding frame is configured to weld the optical fiber at both ends of the optical fiber winding post with the optical fiber of the external optical path, and to connect the optical fiber welding frame with the inner water channel of the optical fiber winding post to form a complete water channel inside, without adopting multiple water channel, this could thereby save volume and flow. Contact surfaces of the connecting block, the optical fiber winding post, and the optical fiber welding frame are sealed with O-rings.

FIG. 14 is a general assembly diagram of another optional optical fiber amplifying equipment according to an embodiment of the present application. As shown in FIG. 14, according to requirements of different winding radius of the optical fiber, the winding radius of the optical fiber grooves on an outer surface of the optical fiber winding post is set to be variable. That is, the cylindrical optical fiber winding post in FIG. 1 is changed into a frustum body with a thin upper part and a thick lower part, and the interior of the modified optical fiber winding post is a cavity simultaneously having a thin upper part and a thick lower part. A spiral pipeline wound along an inner side of the cavity is disposed inside the cavity. The optical fiber welding device is same as that in FIG. 1. The connecting device is similar to an original structure, and a length in a direction parallel to the welding surface may be increased accordingly.

As an optional embodiment, the third coolant channel is a helical channel. The helical channel is helically wound along the inner side surface of the optical fiber winding device 12. A winding gap of the helical channel is less than or equal to a target distance threshold.

Optionally, in this embodiment, the target distance threshold may be set to 0cm, 0.1 cm, 1cm, etc, which is not limited in this embodiment.

As an optional embodiment, the cooling device further includes a fourth coolant channel and a fifth coolant channel. The fourth coolant channel is defined in the first connecting block. The fifth coolant channel is defined in the second connecting block. The first coolant channel is connected to the third coolant channel through the fourth coolant channel. The second coolant channel is connected to the third coolant channel through the fifth coolant channel.

Optionally, in this embodiment, the first coolant channel and the fourth coolant channel may be connected through the hollow second shaft. For example, the first coolant channel and the fourth coolant channel are respectively connected to both ends of the second shaft. Alternatively, the first coolant channel extends into the first connecting block from the hollow area of the second shaft and is directly connected to the fourth coolant channel.

Optionally, in this embodiment, the second coolant channel and the fifth coolant channel may be connected through the hollow second shaft. For example, the second coolant channel and the fifth coolant channel are respectively connected to both ends of the second shaft. Alternatively, the second coolant channel extends into the second connecting block from the hollow area of the second shaft and is directly connected to the fifth coolant channel.

Optionally, in this embodiment, the fourth coolant channel and the third coolant channel may be connected through the hollow first shaft. For example, the fourth coolant channel and the third coolant channel are respectively connected to both ends of the first shaft. Alternatively, the third coolant channel extends into the first connecting block from the hollow area of the second shaft and is directly connected to the fourth coolant channel.

Optionally, in this embodiment, the fifth coolant channel and the third coolant channel may be connected through the hollow first shaft. For example, the fifth coolant channel and the third coolant channel are respectively connected to both ends of the first shaft. Alternatively, the third coolant channel extends into the second connecting block from the hollow area of the first shaft and is directly connected to the fifth coolant channel.

As an optional embodiment, the optical fiber winding surface of the optical fiber winding device is provided with a continuous groove channel helically arranged along a circumferential direction of the optical fiber winding surface. A limiting structure is formed by a groove wall of the groove channel. The target optical fiber is wound on the optical fiber winding device along the groove channel.

Optionally, in this embodiment, a gap of the groove channel may be set at any numerical value according to the actual demands. For example, the gap of the groove channel is set to 0.1 cm, 1cm, 1.5 cm, etc, which is not limited in this embodiment.

Specific examples in the present embodiment may refer to examples described in above-mentioned embodiments and exemplary embodiments, and the present embodiment is not further described herein.

It should be noted that the terms "first", "second", "third", and the like in the description, claims, and drawings are used to distinguish between different objects, rather than used to indicate a specified order or sequence. It should be understood that the data described in this way may be exchanged when appropriate. Furthermore, terms such as "first" and "second" are used herein only to distinguish descriptions, and should not be interpreted as indication or implication of relative importance. Furthermore, the terms "include" and "comprise" as well as any variants thereof are intended to cover a non-exclusive inclusion.

In description of the embodiments of the present application, it should be understood that orientational or positional relationships represented by directional terms mentioned in the present disclosure, such as up, down, left, right, front, horizontal, inside, outside, etc., are orientational or positional relationships based on the drawings, and are merely for the convenience of describing the present disclosure and simplifying the description, rather than indicating or implying that the device or element is intended to have a particular orientation, or is constructed and operated in a particular orientation, and therefore, should not be interpreted as a limitation of the application.

It should be understood that unless specified or limited otherwise, the terms "disposed," "mounted," "connected," and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the description of this specification, the reference terms "an optional embodiment", or "the embodiment of the present application", or "the embodiment", etc. means that specific features, structures, materials, or features described in connection with the embodiment or example are included in at least one embodiment or example of the present application. In this specification schematic expressions of the above terms do not necessarily refer to the same embodiments or examples. Furthermore, the specific features structures materials or features described are combined in a suitable manner in any one or more embodiments or examples.

The foregoing is merely a preferred embodiment of the present application and is not intended to limit the present application which may be subject to various modifications and variations to those skilled in the art. Any modifications, equivalents, modifications, etc. made within the principles of the present application shall be included within the scope of protection of the present application.

## Claims

1. An optical fiber amplifying equipment, comprising an optical fiber winding device, a connecting device, and an optical fiber welding device, wherein
the optical fiber winding device comprises an optical fiber winding surface and a non-optical fiber winding surface, the optical fiber welding device is connected to the non-optical fiber winding surface of the optical fiber winding device through the connecting device;
the optical fiber winding device is configured to wind a target optical fiber on the optical fiber winding surface;
the connecting device is configured to isolate the optical fiber winding device and the optical fiber welding device, so that a distance between the optical fiber welding device and the optical fiber winding surface is greater than a target distance;
the optical fiber welding device is configured to weld, inside the optical fiber welding device, the target optical fiber and an external optical fiber of an external optical path.

2. The equipment according to claim 1, wherein the optical fiber welding device and the connecting device are connected through a first shaft, and the optical fiber welding device is allowed to rotate by taking the first shaft as an axis.

3. The equipment according to claim 2, wherein the first shaft is a hollow structure.

4. The equipment according to claim 1, wherein the connecting device is connected to the non-optical fiber winding surface through a second shaft, and the connecting device is allowed to rotate by taking the second shaft as an axis.

5. The equipment according to claim 4, wherein the second shaft is a hollow structure.

6. The equipment according to claim 4, wherein a length of a part of the connecting device extending along the non-optical fiber winding surface is greater than a maximum distance from a position of the second shaft on the non-optical fiber winding surface to an edge of the non-optical fiber winding surface.

7. The equipment according to claim 1, wherein the optical fiber welding device comprises a first optical fiber welding frame and a second optical fiber welding frame, the connecting device comprises a first connecting block and a second connecting block, a shape of the optical fiber winding device is a post, the optical fiber winding surface comprises an outer side surface of the post, and the non-optical fiber winding surface comprises a top surface of the post and a bottom surface of the post; wherein,
the first optical fiber welding frame is provided with a first welding cavity, a first fiber head of the target optical fiber extends into the first welding cavity, and the first optical fiber welding frame is connected to the top surface through the first connecting block;
the second optical fiber welding frame is provided with a second welding cavity, a second fiber head of the target optical fiber extends into the second welding cavity, and the second optical fiber welding frame is connected to the bottom surface through the second connecting block.

8. The equipment according to claim 7, wherein the optical fiber welding device further comprises an optical fiber winding post, the first optical fiber welding frame is fixed on an upper top surface of the optical fiber winding post through the first connecting block, and the second optical fiber welding frame is fixed on a lower bottom surface of the optical fiber winding post through the second connecting block.

9. The equipment according to claim 7, wherein the first optical fiber welding frame and the second optical fiber welding frame are symmetrically arranged.

10. The equipment according to claim 7, further comprising:
a cooling device, wherein the cooling device comprises a first coolant channel and a second coolant channel;
the first coolant channel is defined in the first optical fiber welding frame, and the first coolant channel is in contact with the first welding cavity;
the second coolant channel is defined in the second optical fiber welding frame, and the second coolant channel is in contact with the second welding cavity.

11. The equipment according to claim 10, wherein the first coolant channel and the second coolant channel are communicated with each other.

12. The equipment according to claim 10, wherein the first coolant channel and the second coolant channel are not communicated with each other.

13. The equipment according to claim 10, wherein the cooling device further comprises a third coolant channel; wherein,
the optical fiber winding device is a hollow cavity, the third coolant channel is defined in the hollow cavity, the third coolant channel is in contract with an inner side surface of the optical fiber winding device, and a contact area of the third coolant channel with the inner side surface of the optical fiber winding device is greater than or equal to a target area threshold.

14. The equipment according to claim 13, wherein the first coolant channel, the second coolant channel, and the third coolant channel are not communicated with each other.

15. The equipment according to claim 14, wherein types of coolants in the first coolant channel, the second coolant channel, and the third coolant channel are different from each other.

16. The equipment according to claim 13, wherein any two of the first coolant channel, the second coolant channel, and the third coolant channel are communicated.

17. The equipment according to claim 13, wherein the third coolant channel is a helical channel, the helical channel is helically wound along the inner side surface of the optical fiber winding device, and a winding gap of the helical channel is less than or equal to a target distance threshold.

18. The equipment according to claim 17, wherein the cooling device further comprises a fourth coolant channel and a fifth coolant channel, wherein the fourth coolant channel is defined in the first connecting block, the fifth coolant channel is defined in the second connecting block, the first coolant channel is connected to the third coolant channel through the fourth coolant channel, and the second coolant channel is connected to the third coolant channel through the fifth coolant channel.

19. The equipment according to claim 1, wherein the optical fiber winding surface of the optical fiber winding device is provided with a continuous groove channel helically arranged along a circumferential direction of the optical fiber winding surface, a limiting structure is formed by a groove wall of the groove channel, and the target optical fiber is wound on the optical fiber winding device along the groove channel.

20. The equipment according to claim 1, wherein a shape of the optical fiber winding device is one of a cylinder, a frustum, a sphere, a drum-shaped body, a prism, and an elliptical sphere.
